# EUROPEAN PATENT SPECIFICATION

(11) **EP 1 993 241 B1**
(45) Date of publication and mention of the grant of the patent: **15.12.2010**
(21) Application number: 07702289.5
(22) Date of filing: 06.02.2007
(51) Int. Cl.: H04L 12/56

(54) **A METHOD FOR REASSEMBLING DATA IN WIRELESS COMMUNICATION SYSTEM AND AN APPARATUS THEREOF**
VERFAHREN ZUR NEUZUSAMMENSTELLUNG VON DATEN IN EINEM DRAHTLOSEN KOMMUNIKATIONSSYSTEM UND VORRICHTUNG DAFÜR
PROCÉDÉ DE RÉASSEMBLAGE DE DONNÉES DANS UN SYSTÈME DE COMMUNICATION SANS FIL ET APPAREIL ASSOCIÉ

(30) Priority: 03.03.2006 CN 200610059342; 22.03.2006 CN 200610034635
(43) Date of publication of application: 19.11.2008
(73) Proprietor: Huawei Technologies Co., Ltd., Longgang District, Shenzhen Guangdong 518129 (CN)
(72) Inventor: SHAO, Fei, Guangdong 518129 (CN); ZHENG, Xiaoxiao, Guangdong 518129 (CN)
(74) Representative: Hengelhaupt, Jürgen
(86) International application number: PCT/CN2007/000406
(87) International publication number: WO 2007/098676

(56) References cited:
- WO-A-02/096006
- WO-A-2005/076688
- WO-A-2005/125125
- CN-A- 1 379 557
- CN-A- 1 505 416
- CN-A- 1 716 835

## Description

### Field of the Invention

The present invention relates to the field of wireless communication technologies, and particularly to a method and a device for reordering data in a wireless communication system.

### Background of the Invention

Universal Mobile Telecommunication Systems (UMTS) are the third generation mobile communication systems that employ WCDMA as the air interface. Usually, UMTS systems are also referred to as WCDMA communication systems. In terms of functionality, the network elements may be classified into Radio Access Network (RAN) and Core Network (CN). The RAN is adapted to handle all radio-related functions, and the CN is adapted to handle switching and routing of all voice calls and data connections between the UMTS system and the external networks. An object of Long Term Evolution (LTE) study is to provide a low-cost network with reduced delay, higher user data rate and improved system capacity and coverage, which employs a brand new system architecture and physical layer to provide services with higher data rate and better performance. An Evolved-Universal Terrestrial Radio Access Network (E-UTRAN) includes an evolved access network and evolved base stations. However, for the existing evolved base stations, there is no solution on how to reorder the data to be transmitted so as to reduce the number of reorderings between protocol layers and reduce the transmission delay.

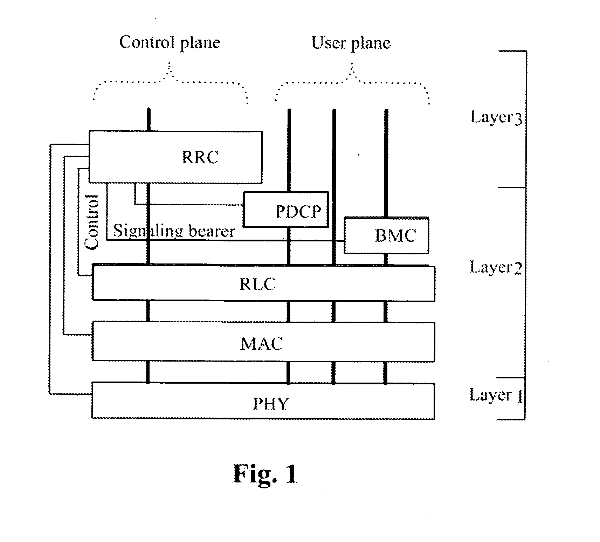

The radio interface protocol framework for an evolved base station includes three layers in which layer 3 is a Radio Resources Control (RRC) layer, layer 2 includes a Packet Data Convergence Protocol (PDCP) and Broadcast/Multicast Control (BMC) layer, a Radio Link Control (RLC) layer and a Media Access Control (MAC) layer, and layer 3 is a physical (PHY) layer, as shown in Figure 1. The uplink/downlink packet service data is transmitted sequentially through the PDCPBMC layer, the RLC layer, the MAC layer and the PHY layer, and then through the PHY layer, the MAC layer, the RLC layer and the PDCPBMC layer at the opposite side, while the signalings are transmitted directly from the RRC layer to the RLC layer. In the above data transmission process of the data from upper layers to lower layers, the data is prefixed with a data header of the layer when passing through each layer. On the peer layer at the opposite side, the data header is removed from the data by parsing the data, and then the contents of the data are transmitted to upper layers.

In the data transmission process, the RLC layer and the MAC layer segment/concatenate the data from upper layers. The RLC layer segments the data (RLC Service Data Unit, RLC SDU) from the upper layers into data blocks in the same size, and prefixes the data blocks with header information to constitute RLC Protocol Data Units (RLC PDUs), and then transmits the RLC PDUs to the MAC layer. On the PHY layer, the data from the MAC layer is segmented/concatenated into physical frames in appropriate size and then sent out. At the receiving side, a process reverse to the segmenting/cascading process is performed. The MAC PDUs are reordered in the order of transmission sequence numbers (e.g., sequence numbers such as 1, 2, 3, etc.). The sequence numbers (SNs) are determined in the receiving order of the data blocks. The data that is received correctly and sequentially is transmitted to the RLC layer. On the RLC layer, the RLC PDUs are reordered according to the header information (SNs) added at the transmitting side. When all data constituting an SDU is received correctly, the RLC SDU is transmitted to upper layers. What are reordered on the MAC layer are the MAC PDUs, each of which may include multiple RLC PDUs. After the MAC PDUs are reordered, they are transmitted to the RLC layer. It is easy for the RLC layer to determine the missing of an RLC PDU according to the inconsecutive data (part of the data is still not transmitted correctly even after Hybrid Automatic Repeat Request, HARQ, and retransmission) and request for Automatic Repeat Request (ARQ) retransmission. After the ARQ retransmission, the RLC PDUs will become disordered again, and therefore need to be sorted.

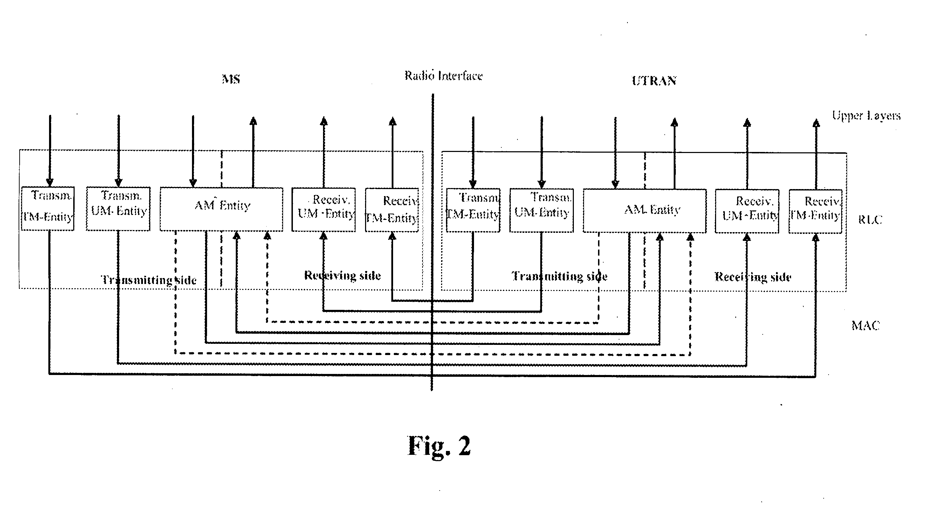

The entities of the RLC sub-layer support three types of services: Transparent Mode (TM) service, Unacknowledged Mode (UM) service and Acknowledged Mode (AM) service. A model of the entities of the RLC sub-layer is shown in Figure 2. The TM service is implemented by a separate transmitting TM entity and a separate receiving TM entity. The transmitting entity receives an SDU from upper layers and segments the SDU into appropriate RLC PDUs, and transmits the RLC PDUs to the MAC sub-layer without adding any overhead to the RLC PDUs. The receiving entity receives the PDUs from the MAC sub-layer, and reassembles the PDUs into an RLC SDU and transmits the RLC SDU to upper layers.

The UM service is implemented by a separate transmitting UM entity and a separate receiving UM entity 4. The transmitting entity receives an SDU from upper layers, segments the SDU into RLC PDUs in appropriate size or links different SDUs into an RLC PDU, attaches an RLC header to the RLC PDU(s), and puts the RLC PDU(s) into a transmitting buffer and transmits the RLC PDU(s) to the MAC sub-layer via a logical channel. The receiving side receives the PDU(s), removes the header from each of the PDU(s), and reassembles the PDU(s) into an SDU(s) and then transmits the SDU(s) to upper layers.

In the AM service, the transmitted or received PDUs include control PDUs and service PDUs. In the AM mode, all the transmitted service PDUs need to be acknowledged by the peer entity to determine whether they need to be retransmitted or not. The control PDUs are some PDU receiving state reports and reset requests generated by the RLC entity. The entity at the receiving side receives the PDUs from the MAC sub-layer, abstracts the state information carried in the PDUs, and puts the PDUs into a receiving buffer, and waits for an entire SDU to be reassembled from the PDUs and sends the SDU to upper layers; or transmits a error-receiving acknowledgement by its transmitting side to request the peer entity to retransmit the PDUs.

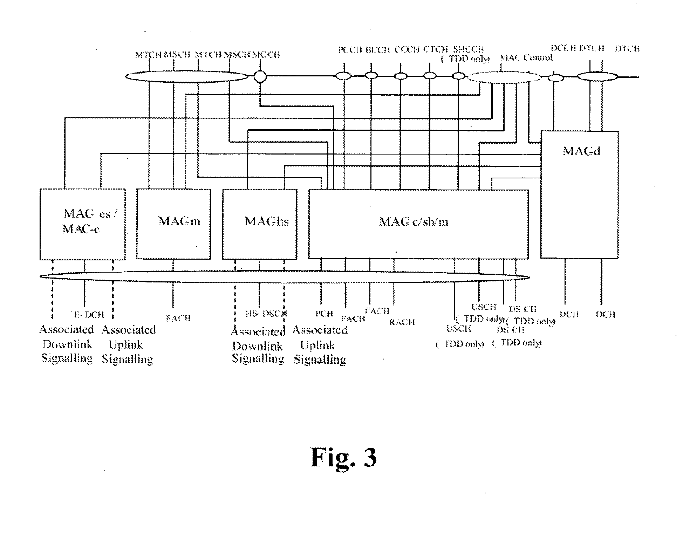

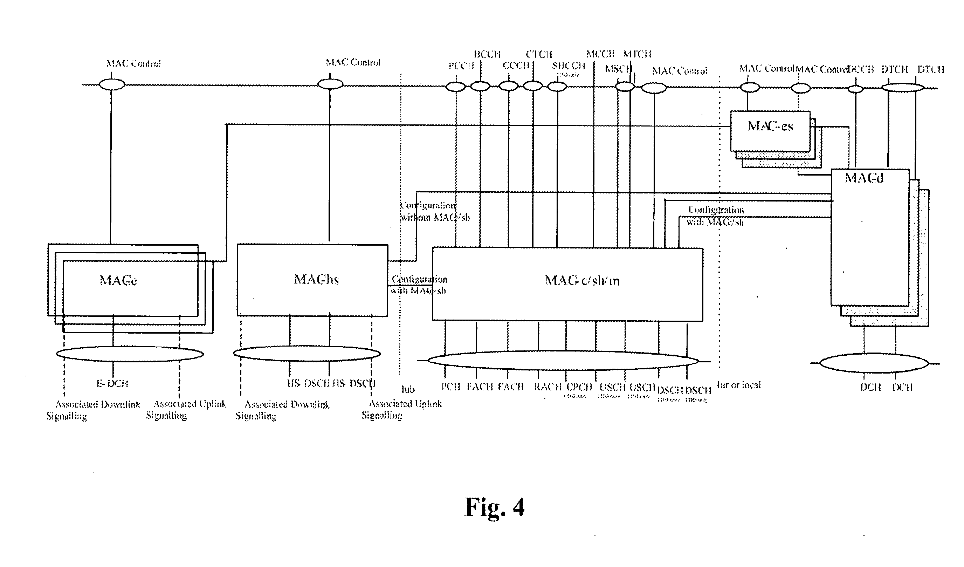

For the MAC sub-layer, the structure at the User Equipment (UE) side is different from the structure at the UTRAN side, as shown respectively in Figure 3 and Figure 4. As specified in WCDMA R6, the receiving side can employ the following mechanisms for the reordering solution.

1. Reordering/reassembly mechanism for AM service

In the AM service, in order to support retransmission, a window mechanism is required to support the reordering function. The window is (VR(R), VR(MR)), where VR(R) is an SN of the next PDU to be received sequentially, and VR(MR)=VR(R) + Configured_Rx_Window_Size. The maximum buffer size is configured by upper layers.

The actual window is (VR(R), VRH)), where VR(H) is the highest SN among the SNs of the received PDUs, and VR(H)<=VR(MR). The movement of the window is implemented by updating the lower boundary of the window. When a PDU with an SN different from the SNs of the PDUs in the window is received, the PDU will be stored in the receiving buffer. When a PDU with an SN beyond the window is received, the PDU will be deleted. The receiving side can only wait for the VR(R) passively and has not approaches (e.g., a timer) to control the movement of the window. The transmitting side can limit the PDU transmission rate with a timer and/or a maximum retransmission number. For each SDU to be transmitted, the timer will be activated. When the timer times out or the maximum retransmission number is reached, the SDU is discarded, and the receiving side is notified to update the window. If the maximum transmission number is reached but no "SDU discard" is configured, the RLC entities will be triggered to reset.

The reassembly mechanism can reassemble integral SDUs as indicated by the LI indication according to the pre-configured reassembly sequence (ordered or disordered reassembly), and transmit the SDUs to the upper layer.

2. Disorder SDU reordering and reassembly for UM service

An ordinary UM service does not need to be reordered because it is not involved in retransmission. Instead, the UM service needs to be reassembled in sequence simply. In case of missing a PDU, all SDUs related to the PDU are deleted.

However, since R6 is introduced into Multimedia Broadcast/Multicast Services (MBMS), a disorder reassembly mechanism at the MCCH receiving side has been employed due to the periodical MCCH retransmission property. That mechanism also employs a window to wait for the PDUs which are missing initially in the transmission process and then are retransmitted. To ensure the real-time performance, the disorder SDU reassembly ensures the reassembly rate at the receiving side.

The window used is (VR(UOH)-OSD_Window_Size, VR(UOH)), where VR(UOH) is the highest SN among the SNs of received PDUs, and the maximum buffer size is configured by upper layers. For a PDU with an SN within the window, the PDU is stored in the buffer. When a PDU with an SN beyond the window is received, the VR(UOH) is updated. The movement of the upper boundary of the window drives the update of the window. A timer Timer_OSD is used to control the update of the VR(UOH). Each time the VR(UOH) is updated, the timer is reset. When the timer times out, all PDUs in the buffer are deleted.

The PDUs in the window are reassembled, and integral SDUs are recovered according to the LI indication and then transmitted to the upper layers, regardless of the order of the SDUs.

3. DAR reordering

DAR is the abbreviation of Duplication Avoidance and Reordering. Due to the selective MTCH merge mechanism for MBMS in WCDMA R6, duplication and disordered arrival will occur in MTCH receiving. Therefore, a window mechanism is introduced at the MTCH receiving side for reordering.

The window is (VR(UDH)-DAR_Window_Size, VR(UDH)), where VR(UDH) represents the highest SN among the SNs of received PDUs, and the maximum buffer size is configured by upper layers. The actual window is (VR(UDR), VR(UDH)), where VR(UDR) is the SN of the next PDU to be transmitted to upper layers sequentially. In other words, all PDUs with SN smaller than that SN have been transmitted to upper layers sequentially. VR(UDR)>=VR(UDH)-DAR_Window_Size. When a PDU with an SN within the window is received, the PDU is stored in the buffer. When a PDU with an SN greater than the upper boundary of the window, the window is updated. Also, the movement of the upper boundary of the window drives the update of the window.

When the PDU with an SN = VR(UDR) is received, the SN of the PDU with the smallest SN among the PDUs which are not received correctly in the window is determined, and the VR(UDR) is updated to that value and all PDUs with an SN smaller than the updated VR(UDR) are transmitted to upper layers for reassembly. If the window moves forward and causes VR(UDR)<VR(UDH)-DAR_Window_Size+1, the VR(UDR) is updated to the smallest SN among the SNs of the PDUs that are not received in the updated window (VR(UDH)-DAR_Window_Size, VR(UDH)), and all PDUs with an SN smaller than the updated VR(UDR) are transmitted to upper layers for reassembly.

The timer Timer_DAR and the state variable VR(UDT) control the receiving window not to move within a long time. The VR(UDT) is initially set as the highest SN in the window, and at the same time the timer Timer_DAR is activated. When a PDU with an SN=VR(UDT) is transmitted to upper layers for reassembly before the timer times out, the timer is reset, and the VR(UDT) is reset to the highest SN in the window. If the timer times out, all PDUs with an SN<=VR(UDT) and PDUs with an SN consecutive to VR(UDT) are transmitted to the upper layer, VR(UDR) is updated to the smallest SN among the SNs of the PDUs that are not received in the buffer, VR(UDT) is reset to the highest SN among the SNs of the PDUs in the window, and the timer is reset.

Different from the former two reordering mechanisms, the DAR reordering function unit only carries out reordering but does not carry out reassembly, and the reassembly function is performed on the upper layer.

4. HSPA reordering

HSPA is the abbreviation of High-Speed Packet Access. High-Speed Downlink Packet Access (HSDPA) reordering mechanism is identical to the DAR reordering mechanism. The object of the HSDPA reordering mechanism is to carry out reordering by Transmission Sequence Number (TSN) for disordered retransmission in different Hybrid Automatic Repeat Request (HARQ) processes, so as to ensure that the received MAC-hs PDUs can be recovered to be MAC-d PDUs and transmitted to an MAC-d entity sequentially.

As enhanced technologies such as HSDPA and Enhanced Uplink are introduced, the proposed Long Term Evolution (LTE), i.e. Evolved UTRA and UTRAN (i.e. long term evolution of 3GPP radio access technologies), requires to take reduced delay, higher user data rate, improved system capacity and coverage and reduced costs for the operators into consideration. For this purpose, the performance demands, the network structure, the radio interfaces and the protocol stacks of LTE networks will be improved accordingly. The existing protocol layer structure leads to many repeated functions, such as the retransmission, segmenting and cascading on the RLC and MAC sub-layers. In order to reduce the delay and simplify protocols, those repeated functions need to be simplified. In addition, an appropriate mechanism is required to ensure the brand new pure IP demand of LTE systems which requires the network transmission to be purely based on IP packet service.

In the numerous network improvement solutions, many functions in RLC are considered as repeated and redundant. Presently, from a popular viewpoint, many functions in RLC can be implemented in MAC, and therefore RLC can be merged into a MAC entity It is believed that the repeated functions in RLC will bring unnecessary delay and complexity, and it is an ideal solution to merge those functions into MAC.

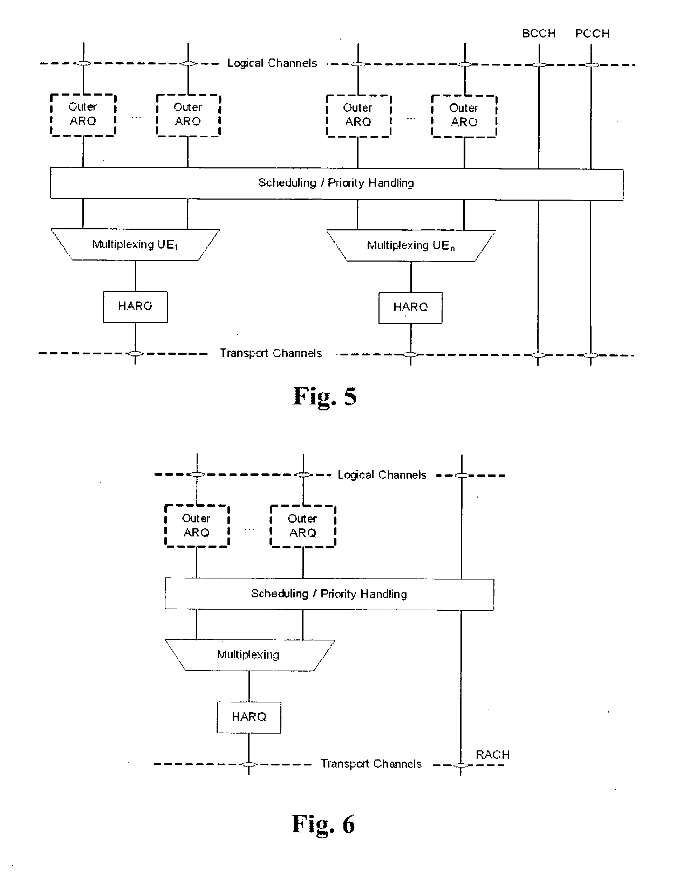

A recently proposed MAC structure in an LTE system is shown in Figure 5 and Figure 6. In the prior art, though the four reordering mechanisms in three modes in the WCDMA R6 system discussed above can meet different reordering demands, but they have drawbacks of structure complexity and function redundancy, and thus result in degraded response rate. Therefore, those four reordering mechanisms cannot be applied to the existing LTE networks. For example, those mechanisms handle ARQ and HARQ separately, and therefore are inefficient and increase delay in ARQ retransmission.

It can be seen that data reordering is required for both the MAC layer and the RLC layer in the existing protocols. Specifically, on the RLC layer, an RLC SDU is segmented according to the RLC PDU size configured by upper layers, and the resulting PDUs are numbered centrally to provide identifications (IDs) for receiving and retransmission. The data to be retransmitted is stored in the ARQ buffer. In the existing protocols, the number of an RLC PDU is referred to as a Sequence Number (SN). In AM mode, the SN has a length of 12-bitI, and in UM mode, the SN has a length of 7-bit. In existing protocols, the size of the RLC PDU is determined when a corresponding RLC entity is configured for a service. When the RLC SDU is segmented into RLC PDUs, pad bits are filled into an RLC PDU that has not enough data to reach to the determined PDU length, so as to ensure a constant PDU size. On the RLC layer at the receiving side, the RLC PDUs are reordered and reassembled according to their SNs. For example, in a HSDPA/HSUPA system, the RLC PDUs each are added with a MAC data header by the MAC-d entity to form MAC-d PDUs, and are concatenated and added with a data header including a TSN in the MAC-hs/MAC-e entity to form a physical frame and then stored in the HARQ buffer. On the MAC layer at the receiving side, the MAC PDUs are reordered according to the TSNs by the HARQ, and the data received correctly and sequentially is transmitted to the RLC layer.

Therefore, in the data transmission process, when passing through different protocol layers at the receiving side, for example, passing through the MAC layer and the RLC layer at the receiving side, the data is respectively reordered according to the added SNs. As a result, the system overhead is increased. In addition, since the MAC layer and the RLC layer are in the base station and the RNC respectively, the two reordering processes increase delay in data transmission.
WO 02/096006 A discloses a method for delivering the packets in sequence. A service included in a MAC layer of the sending terminal transmits the data blocks and possibly retransmits of the same data blocks in response to ACK/NAK signaling by a corresponding service included in a MAC layer of the receiving terminal. No data block sequence number is used in the ACK/NAK signaling.

### Summary of the Invention

Embodiments of the present invention provide a method and device for reordering data in wireless communication system. In this method and device, data transmission delay and data overhead can be reduced by reducing the number of data reorderings in the protocol layers and simplifying data header information.

The present invention provides a method for reordering data in a mobile communication system. The method includes the steps of:
receiving correctly decoded transmission blocks and transmitting the data blocks to a link control entity without reordering the transmission blocks that are received disorderly, by a media access control entity at a receiving side;
decapsulating the received transmission blocks and reordering protocol data units, PDUs, according to the sequence numbers of the upper-layer PDUs, and reassembling decapsulated upper-layer PDUs, obtained through the decapsulating, by the link control entity at the receiving side, to obtain SDUs.

Preferably, the method further includes:
if any one of the transmission blocks contains PDUs from a plurality of link control entities, de-multiplexing the transmission block and forwarding sub-transmission blocks obtained through the de-multiplexing to the corresponding link control entities.

The present invention provides a device for reordering data in a wireless communication system. The device includes a first retransmitting unit and a second retransmitting unit;
the first retransmitting unit is adapted to transmit received transmission blocks to the second retransmitting unit directly without reordering the transmission blocks that are received by the first retransmitting unit disorderly; and
the second retransmitting unit is adapted to receive the transmission blocks from the first retransmitting unit, decapsulate the transmission blocks to obtain upper-layer PDUs, and reorder the PDUs according to the sequence numbers of the upper-layer PDUs and reassemble the upper-layer PDUs to obtain SDUs, and then transmit the SDUs to the upper layers.

Preferably, the device further includes:
a de-multiplexing unit connected to the first retransmitting unit and the second retransmitting unit respectively, which is adapted to de-multiplex the transmission blocks consisting of PDUs from a plurality of link control entities and forwarding sub-transmission blocks obtained through the de-multiplexing to the corresponding link control entities.

By migrating the RLC layer to the base station or merging the RLC layer into the MAC layer, the technical solutions provided in the embodiments of the present invention can greatly reduce the delay in data interaction between the two layers and is helpful to improve the data transmission efficiency. By simplifying the reorderings on the two layers into one reordering, the technical solutions not only simplify data encapsulation on the protocol layers, eliminate HARQ TSNs, and reduce data overhead, but also reduce the delay in data reordering resulted from HARQ and improve the data transmission efficiency, and therefore are especially beneficial to disorderly transmitted SDUs.

With the technical solutions provided in the embodiments of the present invention, the delay in data interaction between the layers can be greatly reduced or even neglected. With the approach of simplifying the reorderings in the layers, the reordering and retransmission functions can be implemented on the base station and in one time, instead of being implemented separately on two layers. In this way, the increase of delay in ARQ retransmission is avoided, the system complexity is decreased, and the data transmission rate is improved.

### Brief Description of the Drawings

Figure 1 is a structural diagram of a framework of radio interface protocols in the prior art;

Figure 2 is a structural diagram of a model of RLC entity;

Figure 3 is a structural diagram of MAC at the UE side;

Figure 4 is a structural diagram of MAC at the network side;

Figure 5 is a structural diagram of Uplink (UL) MAC in an evolved Node B (eNB) of an LTE network;

Figure 6 is a structural diagram of Downlink (DL) MAC in a UE of an LTE network;

Figure 7 is an architecture diagram of an evolved universal terrestrial radio access network (E-UTRAN) system;

Figure 8 is a schematic diagram of a device for reordering data according to an embodiment of the present invention;

Figure 9 is a flow chart of a method for reordering data according to an embodiment of the present invention;

Figure 10 shows an implementation procedure of the method for reordering data according to an embodiment of the present invention;

Figure 11 is a schematic diagram of protocol layers in the method for reordering data according to an embodiment of the present invention; and

Figure 12 shows a reordering buffer at the receiving side in the method for reordering data according to an embodiment of the present invention.

### Detailed Description of the Embodiments

To make the technical solutions of the present invention understood better by those skilled in the prior art, the E-UTRAN system on which the present invention is based will be introduced briefly before the present invention is described.

In the technical solutions provided in the embodiments of the present invention, the receiving side reorders/reassembles the de-multiplexed data packets according to the SNs of the data packets, sets a receiving buffer condition, and carries out subsequent processing for the reordered data according to the receiving buffer condition. Each received SDU or PDU is provided with a SN, and the PDUs to be reordered are transmitted by the HARQ to the ARQ reordering/reassembling units for reordering, according to the HARQ PDU header information.

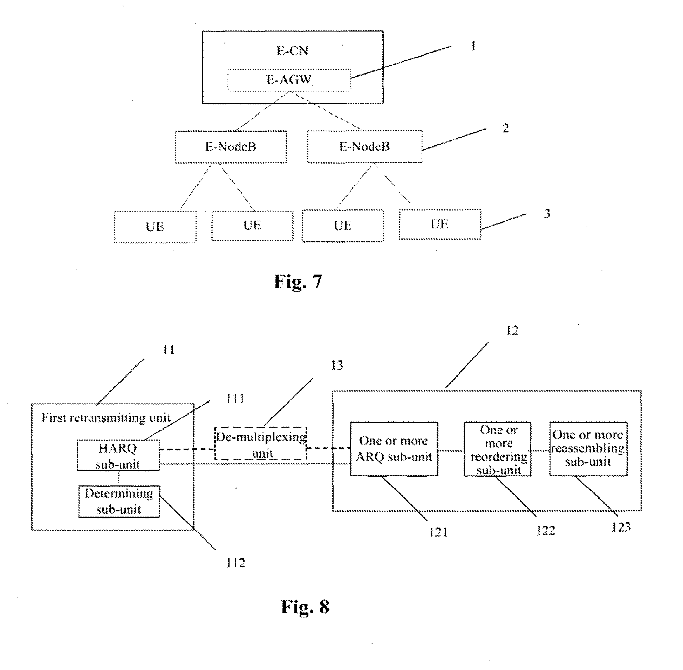

Figure 7 shows an architecture diagram of an E-UTRAN system. The E-UTRAN includes: a layer of Evolved Access Gateway (E-AGW) 1 and a layer of evolved base stations (E-NodeBs) 2. The E-NodeBs each manages a plurality of UEs 3. The E-Nodes can be connected to the E-AGW directly or through an IP network. The E-AGW is in the Evolved Core Network (Evolved CN), has functions similar to those of the Radio Network Controller (RNC) in R6 protocol, and is adapted to manage different E-NodeBs. Each of the E-NodeBs is connected to the E-AGW directly and manages the users in the cell. For the protocol stack of the E-UTRAN, the E-NodeB includes an Evolved MAC layer and an Evolved PHY layer. The E-AGW includes an evolved packet data convergence protocol layer.

On the basis of the understanding on the above technologies, the present invention is further detailed hereunder with reference to the embodiments in conjunction with the accompanying drawings.

Figure 8 shows an architecture diagram of a device for reordering data in a mobile communication system according to an embodiment of the present invention. The device can be in an E-NodeB or a UE. The device includes a first retransmitting unit 11 and a second retransmitting unit 12, and can further include a de-multiplexing unit 13 (as shown by the dashed lines in Figure 8). The first retransmitting unit 11 is adapted to transmit a received transmission block to the second retransmitting unit directly. The second retransmitting unit 12 is connected to the first retransmitting unit 11, and is adapted to decapsulate the received transmission block to obtain upper-layer PDUs, reorder and reassemble the high-layer PDUs to obtain an SDU, and then transmit the SDU to upper layers. The de-multiplexing unit 13 is connected to the first retransmitting unit 11 and the second retransmitting unit 12, respectively, and is adapted to de-multiplex a transmission block consisting of PDUs from a plurality of link control entities, and forwarding the de-multiplexed transmission sub-blocks to the corresponding link control entities.

The first retransmitting unit 11 includes a Hybrid Automatic Repeat on Request (HARQ) sub-unit 111 and a determining sub-unit 112. The HARQ sub-unit 111 is adapted to retransmit the receive transmission block. The determining sub-unit 112 is adapted to determine whether the retransmission number of the transmission block exceeds a pre-configured maximum retransmission number. If the retransmission number of the transmission block exceeds the maximum retransmission number, the determining sub-unit 112 notifies the second retransmitting unit that the data in the transmission block is missing.

The second retransmitting unit 12 includes at least an ARQ sub-unit 121, at least a reordering unit 122 and at least a reassembling sub-unit 123. The ARQ sub-unit 121 is connected to the HARQ sub-unit 111 or the de-multiplexing unit 13, and is adapted to decapsulate the received transmission block or sub-transmission blocks and transmit the resulting upper-layer PDUs. The reordering sub-unit 122 is connected to the ARQ sub-unit 121, and is adapted to reorder the received upper-layer PDUs according to the SNs or segment SNs and transmit the reordered high-layer PDUs. The reassembling sub-unit 123 is connected to the reordering sub-unit 122, and is adapted to remove information headers from the received high-layer PDUs and reassemble the PDUs to obtain an SDU.

It can be seen from above the device that, for the evolved mobile communication system, the RLC layer is merged with the MAC layer, and therefore the interface transmission delay between the protocol layers can be reduced or even neglected. For the SDUs (i.e. IP data packets) to be transmitted, the device for reordering data can be implemented in either of two approaches. One approach is to deploy the reordering device in the UE. The other approach is to deploy the reordering device in the evolved base station (E-NodeB). Hereunder the two implementation approaches are described respectively.

In one implementation approach, the MAC layer at the transmitting side in the E-NodeB segments and/or concatenates the SDUs to obtain PDUs, encapsulates the PDUs each with an information header to constitute transmission blocks (TBs), and transmits the TBs through the physical layer to the receiving side of the UE. Upon receipt of the TBs, the MAC layer at the receiving side of the UE retransmits the TBs through a Hybrid Automatic Repeat Request (HARQ) layer at the receiving side to obtain correctly decoded TBs, and then transmits the decoded TBs to an Automatic Repeat Request (ARQ) layer at the receiving side. The ARQ layer decapsulates the received TBs to obtain disordered PDUs, reorders and reassembles the PDUs according to their SNs or segment SNs to obtain ordered SDUs, and transmits the SDUs to upper layers.

The ARQ refers to a transmission mechanism that ensures reliability of transmission by means of retransmission, and a data packet is retransmitted if the previous attempt of transmitting the data packet fails. The HARQ protocol is improved from ARQ by introducing a Forward Error Correction (FEC) subsystem into the ARQ system. The FEC subsystem is adapted to correct errors and thereby reduce the number of retransmissions. In HARQ, the transmitting side begins to handle the next data block only after a transmitted data block is received correctly. The system uses an SN to identify the current data block and the next data block to be transmitted. The receiving side uses 1-bit acknowledgement information (ACK or NACK) to indicate whether the transmission block is decoded correctly.

The other implementation approach is a process reverse to the above implementation approach. The process is essentially identical to that of the above approach, except for the difference that the transmitting side device in the UE segments and/or concatenates the SDUs to be transmitted, encapsulates the resulting PDUs each with an information header to constitute TBs, and then transmit the TBs to the E-NodeB through the physical layer. The processing procedures at the E-NodeB are identical to those at the receiving side of the UE as described above, and therefore will not be repeated here.

The physical layer serves to perform operations such as modulation, encoding and time/frequency synchronization on the received data packets. The MAC layer performs operations such as media access control, dynamic scheduling and UE data stream priority handling. The ARQ mechanism carries out retransmission over HARQ and prevents data errors resulted from HARQ failure. In addition, the ARQ mechanism further has functions such as segmenting, reassembling, segmenting and cascading the disordered data packets, transmitting the data packets to upper layers, and duplication detection and flow control.

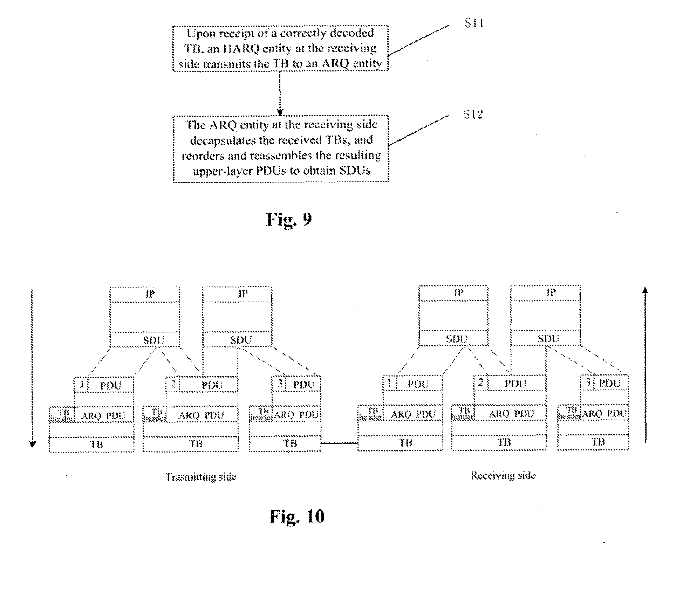

In addition, the present invention provides a method for reordering data in a communication system. The flow chart of the method is shown in Figure 9. The method includes the following steps.

In step S11, upon receipt of correctly decoded TBs, the MAC entity at the receiving side transmits the TBs to a link control entity.

In step S 12, the link control entity at the receiving side decapsulates the received TBs, and reorders and reassembles the resulting upper-layer PDUs to obtain SDUs.

The method further includes, between steps S11 and S12, the following step: if the received TBs consist of PDUs from more than one link control entities, the TBs are de-multiplexed and forwarded to the corresponding link control entities.

For ease of understanding, the present invention will be described hereunder by an example in which a UE serves as the transmitting side and an E-NodeB serves as the receiving side. The process in the reversed case is similar.

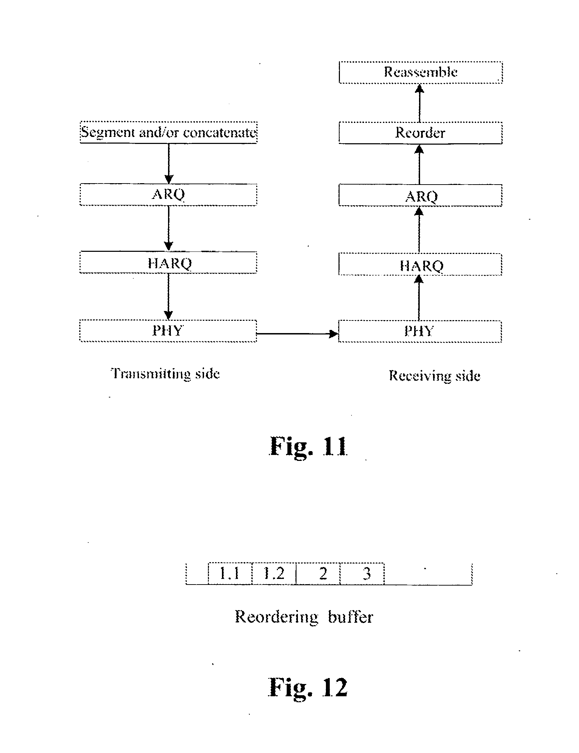

Referring to Figure 10 and Figure 11, which show embodiments of the data transmission process in the method of the present invention, respectively. As shown in the drawings, the segmenting and/or cascading function entity on the MAC layer at the transmitting side segments and/or concatenates the upper-layer SDUs (i.e. IP data packets) and sets appropriate SNs (e.g., 1, 2 and 3 as shown in Figure 10) to form PDUs, and then transmits the PDUs to the ARQ entity. The TB generating function entity on the MAC layer adds header information (a TB header, e.g., service priority queue ID, etc.) to the received PDUs, multiplexes the PDUs to form TBs, and transmits the TBs to the HARQ function entity. The HARQ function entity at the receiving side receives correctly decoded TBs through retransmission, and transmits the correctly received TBs to the ARQ entity, without any reordering. After obtaining disordered PDUs through de-multiplexing and decapsulation, the ARQ entity does not send a state report. Instead, it stores the PDUs in a reordering buffer. The reordering function entity reorders the PDUs according to the SNs or Segment SNs (SSNs). The SN is the sequence number of the PDU that is transmitted initially, and the SSN is the sequence number of a segment in the PDU that is transmitted initially. In this way, the PDUs can be retransmitted, reordered and reassembled at the receiving side according to the SNs and SSNs. The reassembling function entity removes the information headers from the PDUs, reassembles the PDUs to obtain correct and ordered SDUs, and transmits the SDUs to upper layers. Furthermore, at the receiving side, if the retransmission number of a data block exceeds a pre-configured maximum retransmission number, the HARQ entity can notify the ARQ entity that the TB is missing by inter-layer primitives. The state report can be triggered periodically, created by the link control entity automatically, or triggered by reaching the pre-configured maximum retransmission number of the HARQ.

In another embodiment of the present invention, if there are two SDUs (i.e. IP packets) at the transmitting side, the two SDUs are segmented and concatenated into 3 PDUs respectively with an SN as 1, 2 and 3. Then the TBs are formed and retransmitted at the HARQ entity. Upon receipt of the TBs, the receiving side decapsulates the TBs and transmits the resulting PDUs to the reordering entity. The reordering entity reorders the PDUs according to the SNs or SSNs, removes the information headers from the PDUs, and reassembles the PDUs. In this implementation process, if the retransmission number of a TB exceeds a pre-configured maximum retransmission number, the HARQ entity notifies the ARQ entity to retransmit the PDU. When the PDUs are retransmitted, they can be segmented and concatenated again. For example, PDU 1 can be further segmented into PDU 1.1 and PDU 1.2, i.e. two PDUs with (SN=1, SSN=1) and (SN=1, SSN=2). The sequence of the PDUs in the reordering buffer at the receiving side is shown in Figure 12.

It can be seen that in the solutions provided by the embodiments of the present invention, the reordering is omitted in the HARQ entity at the receiving side. In other words, upon receipt of the correct TBs, the HARQ entity at the receiving side transmits the TBs immediately to the ARQ entity. The reordering is carried out in the ARQ entity. For the HARQ entity, the TSNs can be omitted so as to reduce the overhead of the data. Therefore, the present invention can not only reduce the number of data reorderings between protocol layers and simplify header information of the data, but also reduce data transmission delay and overhead of the data.

The method for reordering/reassembling data provided in the present invention is described hereunder by taking an LTE network as an example and mainly with respect to AM and UM services. For a UM service, only the HARQ service is used, and the reordering mechanism is only for the HARQ disorder.

For an AM service, the HARQ processes at the receiving side receive respective TBs. If the TBs are verified to be correct, the HARQ processes transmit the TBs to a MUX unit where the TBs are de-multiplexed and then transmitted to the ARQ entities. The ARQ reordering function unit reorders the PDUs according to the SNs of the PDUs and reassembles the PDUs into SDUs, and then transmits the SDUs to upper layers, and triggers retransmission or deletes the corresponding PDUs in the retransmission buffer. For the UM service, the HARQ processes at the receiving side receive the respective TBs. If the TBs are verified correctly, the HARQ processes transmit the TBs to the MUX unit where the TBs are de-multiplexed and transmitted to the ARQ entities. For the UM service, the ARQ entities do not carry out retransmission, but only segment and concatenate the PDUs. The reordering function unit sorts the PDUs for the disorder due to HARQ retransmission, and reassembles the PDUs into SDUs and transmits the SDUs to upper layers. For some real-time services in which HARQ functionality is not used, reordering is unnecessary.

In order to implement reordering, in the method provided by the present invention, an HARQ receiving buffer and an ARQ receiving buffer are provided, which are adapted to store the data waiting for HARQ retransmission and ARQ retransmission, respectively. In view of the disorder due to utilizing a buffer to store the data waiting for HARQ retransmission and ARQ retransmission, the present invention puts forward a reordering mechanism. The reordering mechanism includes a window control mechanism and a timer control mechanism, and is adapted to distinguish between HARQ retransmission disorder waiting and ARQ retransmission disorder waiting. The buffer and reordering mechanisms is discussed as below.

1. HARQ buffer

Some parameters and state variables are defined as follows.

Highest_received_SN represents the highest sequence number among the sequence numbers of the PDUs stored in the buffer;

Next_expected_SN represents the sequence number of the next PDU in the buffer to be transmitted to upper layers or to the next function unit sequentially;

HARQ_RcvWindow_Size represents the maximum HARQ buffer size configured by the upper layer for appropriate QoS;

The HARQ buffer window is defined as (Highest_received_SN - HARQ_Window_Size, Highest_received_SN).

2. ARQ buffer window

ARQ_RcvWindow_Size is the maximum ARQ buffer size configured by the upper layer.

The definition of the ARQ buffer window includes:
If Next_expected_SN < Highest_received_SN - HARQ_window_Size, the ARQ buffer window is defined as:
   (Next_expected_SN, Highest_received_SN - HARQ_Window_Size);
   If Highest_received_SN - HARQ_Window_Size - Next_expected_SN > ARQ_RcvWindow_Size, the ARQ buffer window is defined as (Next_expected_SN, Next_expected_SN + ARQ_RcvWindow_Size);

3. Relationship between ARQ buffer and HARQ buffer

3-1) Overlap detection: if Next_expected_SN < Highest_received_SN - HARQ_window_Size, the HARQ buffer and the ARQ buffer are overlapped to one buffer. Highest_received_SN - HARQ_Window_Size - Next_expected_SN < ARQ_RcvWindow_Size.

3-2) Overflow detection: if Highest_received_SN - HARQ_Window_Size - Next_expected_SN > ARQ_RcvWindow_Size, it indicates window overflow occurs. In this case, the receiving side sends a window overflow indication to the transmitting side, and the new data transmission in the corresponding ARQ entity at the transmitting side is suspended. Thus only retransmission is permitted, but new data transmission is prohibited.

3-3) Separation detection: if Highest_received_SN - HARQ_Window_Size - Next_expected_SN < ARQ_RcvWindow_Size, it indicates the HARQ buffer window is separated from the ARQ buffer window. The two windows are originally overlapped. In this case, the receiving side can send a suspension and termination indication to the transmitting side, or the transmitting side can make configuration according to the state of the retransmission buffers.

4. Reference boundary for the HARQ receiving window

In an embodiment of the present invention, a reference boundary can be set for the HARQ receiving window as the reordering mechanism. Specifically, HARQ_RcvWindow_Edge is the actual boundary for the HARQ buffer and the ARQ buffer, and numerically corresponds to the SN of the next PDU to be received by the HARQ entity sequentially.
HARQ_RcvWindow_Edge <= Highest_received_SN - HARQ_Window_Size. When the lower boundary of the window updates as the upper boundary of the window (i.e. Highest_received_SN) updates, if a PDU with SN=Highest_received_SN - HARQ_Window_Size already exists in the buffer, the actual lower boundary of the window HARQ_RcvWindow_Edge is updated to the lowest SN among the SNs of PDUs that have not been received in the window up to now.

In this case, the ARQ window becomes (Next_expected_SN, HARQ_RcvWindow_Edge). Other ARQ operations are identical to those in the reordering mechanism described above.

A timer Timer_HARQ (T_SN) is defined to control the movement of the HARQ window. T_SN is initially set to the Highest_received_SN in the buffer, and the timers Timer_HARQ are activated. If a PDU with SN=T_SN is received when the timer does not time out (that is, T_SN <=HARQ_RcvWindow_Edge), the timer is reset, and T_SN is reset to the highest SN in the window. If the timer times out, that is, T_SN>HARQ_RcvWindow_Edge, HARQ_RcvWindow_Edge is updated to the lowest SN among the SNs of the PDUs that have not been received in (Highest_received_SN, T_SN), and T_SN is reset to the highest SN among the SNs of the PDUs in the window and the timer is reset.

5. Employing a timer as the reordering mechanism

A timer Timer_Rcv is activated each time an ARQ PDU is received from the MUX unit. A state variable HARQ_RcvWindow_Edge_T presents the boundary of the HARQ receiving window, i.e. the highest SN among the SNs of the PDUs received when the timer times out. Highest_received_SN represents the highest SN among the SNs of the PDUs stored in the buffer. Next_expected_SN represents the SN of the next PDU in the buffer to be transmitted to the upper layer or to the next function unit sequentially. Next_expected_SN can be smaller than HARQ_RcvWindow_Edge_T.

ARQ_RcvWindow_Size is the upper limit of the maximum ARQ buffer size (window size) configured by the upper layer. The ARQ receiving buffer is still used to control the window. The receiving window is (Next_expected_SN, HARQ_RcvWindow_Edge_T). Usually, the maximum buffer size is smaller than or equal to ARQ_RcvWindow_Size. If HARQ_RcvWindow_Edge_T - Next_expccted_SN > ARQ_RcvWindow_Size, the ARQ window is defined as (Next_expected_SN, Next_expected_SN + ARQ_RcvWindow Size). In this case, the receiving side sends a window overflow indication to the transmitting side, and the new data transmission in the corresponding ARQ entity at the transmitting side will be suspended. Thus only retransmission is permitted, but new data transmission is prohibited.

The maximum HARQ buffer size or maximum ARQ buffer size (i.e. window size) can be set by the upper layers as required for the service.

### Embodiment 1

When a PDU with SN = x is received, the following steps are executed (the step numbers can indicate the execution order or not).

Step 1: If x falls into (Next_expected_SN, Highest_received_SN) and the data corresponding to the SN already exists in the buffer, then the data is deleted; if x is beyond (Next_expected_SN, Highest_received_SN), then the PDU is put into the buffer according to the SN.

Step 2: If x > Highest_received_SN, if x - HARQ__Rcvwindow_Size - Next_expected_SN > ARQ_RcvWindow_Size, then {
a new data transmission suspension message is sent to the transmitting side, and the ARQ window is updated to (Next_expected_SN, Next_expected_SN + ARQ_RcvWindow_Size);
the PDUs with SN ranging from Next_expected_SN + ARQ_RcvWindow_Size to Highest_receivcd_SN - HARQ_RcvWindow_Size are deleted;
a state report is triggered under a state report triggering rule; Highest_received_SN is updated to x;}
else { missing PDUs from Highest_received_SN - HARQ_RcvWindow_Size to x - HARQ_RcvWindow_Size are checked;
   a state report is triggered under the state report triggering rule; Highest_received_SN is updated to x}.

Step 3: if x = Next_expected_SN, then {
whether there is any PDU with an SN consecutive to the Next_expected_SN is checked;
Next_expected_SN is updated to the SN of the first PDU that has not been received starting from x}.

### Embodiment 2

When a PDU with an SN = x is received, the following steps are executed (the step numbers can indicate the execution order or not).

Step 1: if x falls into (Next_expected_SN, Highest_received_SN), then {
if the data corresponding to the SN already exists in the buffer, then the data is deleted;
else the PDU is put into the buffer according to the SN}.

Step 2: if x > Highest_received_SN, then {
Highest_received_SN is updated to x;
whether x - HARQ_RcvWindow_Edge > HARQ_RcvWindow_Size is checked; if x - HARQ_RcvWindow_Edge > HARQ__Rcvwindow_Size, HARQ_RcvWmdow_Edge is updated to x - HARQ_RcvWindow_Size}.

Step 3: if the PDU with an SN = HARQ_RcvWindow_Edge exists in the buffer, then {
whether there is any PDU with an SN consecutive to the SN of the above PDU in the buffer is checked, and HARQ_RcvWindow_Edge is updated to the lowest SN among the non-consecutive SNs of PDUs}.

Step 4: a state report is triggered according to the updated HARQ_RcvWindow_Edge under the state report triggering rule;

Step 5: if HARQ_RcvWindow-Edge Next_expected_SN > ARQ_Rcvwindow_Size, then { a new data transmission suspension message is sent to the transmitting side, and the ARQ window is updated to (Next_expected_SN, Next_expected_SN + ARQ_RcvWindow_Size);
the PDUs with an SN ranging from Next_expected_SN + ARQ_RcvWindow_Size to HARQ_RcvWindow_Edge are deleted;
a state report is triggered under the state report triggering rule}.

Step 6: if x = Next_expected_SN, then {
whether there is any PDU with an SN consecutive to the Next_expected_SN is checked;
Next_expected_SN is updated to the SN of the first PDU that has not been received starting from x}.

At the same time, the following timer operations are executes (the step numbers can indicate the execution order or not).

Step 1: if PDUs exist in the buffer but the Timer_HARQ is not activated, then {
the timer Timer_HARQ is activated;
T_SN is set to the highest SN among the SNs of the PDUs in the buffer}.

Step 2: if HARQ_RcvWindow_Edge >= T_SN before the timer times out, then the timer is stopped;

Step 3: if the timer times out and HARQ_RcvWindow_Edge <T_SN, then {
HARQ_RcvWindow_Edge is updated to T_SN+1;
whether the PDU with an SN=T_SN+1 exists in the buffer is checked; if there is any PDU with an SN successive to the T_SN+1 in the buffer, HARQ_RcvWindow_Edge is updated to the lowest SN among the non-consecutive SNs of PDUs}.

Step 4: if HARQ_RcvWindow_Edge - Next_expected_SN > ARQ_RcvWindow_Size, then { a new data transmission suspension message is sent to the transmitting side, and the ARQ window is updated to (Next_expected_SN, Next_expected_SN + ARQ_RcvWindow_Size);
the PDUs with an SN ranging from Next_expected_SN + ARQ_RcvWindow_Size to HARQ_RcvWindow_Edge are deleted; a state report is triggered under the state report triggering rule}.

### Embodiment 3

When a PDU with an SN = x is received, the following steps are executed (the step numbers can indicate the execution order or not).

In step 1, the timer Timer_Rcv is triggered;

In step 2, if the SN corresponding to the timer is y when the timer times out, then {
if the state variable HARQ_RcvWindow_Edge_T is not activated, then HARQ_RcvWindow_Edge_T is set to y;
else if HARQ_RcvWindow_Edge_T < y, then HARQ_RcvWindow_Edge_T is updated to y}.

In step 3, if a PDU with an SN y = Next_expected_SN is received, then {
whether there is any PDU with an SN consecutive to the Next_expected_SN is checked;
Next_expected_SN is updated to the SN of the first PDU that has not been received starting from x;
all timers corresponding to SN < Next_expected_SN are stopped}.

In step 4, HARQ_RcvWindow_Edge_T is updated, and a corresponding state report is triggered under the state report triggering rule;

In step 5, if HARQ_RcvWindow_Edge_T - Next_expected_SN > ARQ_RcvWindow_Size, then { a new data transmission suspension message is sent to the transmitting side, and the ARQ window is updated to (Next_expected_SN, Next_expected_SN + ARQ_Rcvwindow_Size);
the PDUs with an SN ranging from Next_expected_SN + ARQ_RcvWindow_Size to HARQ_RcvWindow_Edge_T are deleted; a state report is triggered under the state report triggering rule}.

In addition, if the received TBs each consist of PDUs from a plurality of link control entities, the correctly received TBs are de-multiplexed, and the resulting sub-TBs are forwarded to corresponding link control entities. The processing procedures in case of the multiple link control entities are identical to the processing procedure in case of receiving PDUs relating to a single link control entity as described above, and therefore will not be repeated here.

In a method according to an embodiment of the present application, if the retransmission number of a transmission block exceeds a pre-configured maximum retransmission number, the media access control entity notifies the link control entity with inter-layer primitives that data in the transmission block is missing.

In a method according to another embodiment of the present application, a state report is triggered periodically, triggered by reaching the maximum transmission number in the media access control entity, or created by an Automatic Repeat Request, ARQ, entity automatically.

In a method according to another embodiment of the present application, the receiving by the media access control entity the correctly decoded transmission blocks comprises verifying data blocks received by a Hybrid Automatic Repeat Request, HARQ.

In a method according to another embodiment of the present application, the maximum ARQ buffer size is configured by the upper layers.

In a method according to another embodiment of the present application, the highest sequence number among the sequence numbers of the PDUs received in the reordering buffer, the lower boundary of the HARQ buffer size, and the sequence number of the next PDU to be received by the ARQ entity orderly are represented with state variables.

In a method according to another embodiment of the present application, the next PDU to be received by the ARQ entity orderly refers to the next PDU that is expected to be received orderly to be buffered by the ARQ entity, and all PDUs with a sequence number smaller than the sequence number of the next PDU have been moved out from the reordering buffer.

In a device according to an embodiment of the present application, the reordering device is located in an evolved base station or a user equipment.

In the solutions provided by the embodiments of the present invention, the receiving side reorders/reassembles the de-multiplexed data packets according to the SNs of the data packets, sets a receiving buffer condition, and carries out subsequent processing for the reordered data against the receiving buffer condition. Each received SDU or PDU is provided with a SN. Here, the SN for reordering and reassembly is a unique ARQ SN. The SN may be an SDU SN from the upper layers or an ARQ SN added by the ARQ function entity at the transmitting side. If there are SSNs created through segmenting and cascading, all segments corresponding to each SN need to be collected. The ARQ unit carries out reordering/reassembly according to the SNs. Reordering is to reorder the PDUs that are disordered in the transmitting and receiving processes, and reassembly is to reassemble SDUs from PDUs. Reassembly covers reassembly for disordered transmission and reassembly for ordered transmission. The HARQ entity transmits the PDUs to be reordered to the ARQ reordering/reassembling units for reordering, according to the header information in the HARQ PDUs.

With the technical solutions provided in the embodiments of the present invention, the delay in data interaction between the layers can be greatly reduced or even neglected. With the approach of simplifying the reorderings in the layers, the reordering and retransmission functions can be implemented on the base station and in one time, instead of being implemented separately on two layers. In this way, the increase of delay in ARQ retransmission is avoided, the system complexity is decreased, and the data transmission rate is improved.

It should be noted that while the present invention has been illustrated and described with reference to some preferred embodiments, various variations and modifications can be made by those skilled in the art without departing from the principle of the present invention. These variations and modifications intend to fall into the scope of the present invention.

## Claims

1. A method for reordering data in a wireless communication system, comprising the steps of:
receiving correctly decoded transmission blocks and further **characterized by** the steps of : transmitting the transmission blocks to a link control entity without reordering the transmission blocks that are received disorderly (S11), by a media access control entity at a receiving side;
decapsulating the received transmission blocks and reordering protocol data units, PDUs, according to the sequence numbers of the upper-layer PDUs, and reassembling (S12) the decapsulated upper-layer PDUs, obtained through the decapsulating, by the link control entity at the receiving side, to obtain service data units, SDUs.

2. The method according to claim 1, wherein the method further comprises:
if any one of the transmission blocks contains PDUs from a plurality of link control entities, de-multiplexing the transmission block and forwarding sub-transmission blocks obtained through the de-multiplexing to the corresponding link control entities.

3. The method according to claim 1 or 2, wherein upon obtaining the upper-layer PDUs, the link control entity stores the upper-layer PDUs into a reordering buffer before reordering the PDUs according to the sequence numbers of the upper-layer PDUs; and
the link control entity reassembles the reordered upper-layer PDUs into the SDUs with a predefined reassembly strategy, and transmits the reassembled SDUs to upper layers.

4. The method according to claim 1 or 2, wherein the reordering and reassembling the decapsulated upper-layer PDUs to obtain the SDUs comprises:
reordering the received upper-layer PDUs according to sequence number or segment sequence number, removing information headers from the reordered upper-layer PDUs, and reassembling the PDUs to obtain the SDUs, by a reordering entity at the receiving side.

5. The method according to claim 3, wherein the predefined reassembly strategy comprises: setting whether to transmit the SDUs orderly or disorderly; if the predefined reassembly strategy is set to transmit the SDUs orderly, recovering the SDUs in an order identified by sequence numbers of the PDUs and transmitting the SDUs to the upper layers; if it
is set to transmit the SDUs disorderly, transmitting the SDUs in any order.

6. The method according to claim 3, wherein the predefined reordering mechanism utilizes a predefined moving window to control an HARQ buffer range and an ARQ buffer range, to handle a received new PDU, to detect the PDUs to be reassembled and/or missing of the PDUs, and reassemble the PDUs and/or create a response.

7. The method according to claim 6, wherein the HARQ buffer range controlled by the predefined moving window is represented by a fixed window size parameter configured by the upper layers, and has an initial range as a highest sequence number among sequence numbers of the PDUs received in the reordering buffer subtracted by the fixed window size parameter configured by the upper layers and the highest sequence number among the sequence numbers of the PDUs received in the reordering buffer.

8. The method according to claim 6, wherein the ARQ buffer range controlled by the predefined moving window is determined by a lower boundary of an HARQ buffer size, a sequence number of a PDU received by the ARQ entity orderly and a maximum ARQ buffer size jointly.

9. The method according to claim 8, wherein if the difference between a sequence number of the next PDU to be received by the ARQ entity orderly and an allowable minimum HARQ buffer size is smaller than or equal to the maximum ARQ buffer size, the ARQ buffer range is from the sequence number of the next PDU to be received by the ARQ entity orderly to the allowable minimum HARQ buffer size;
if the difference between the sequence number of the next PDU to be received by the ARQ entity orderly and the allowable minimum HARQ buffer size is greater than the maximum ARQ buffer size, the ARQ buffer range is from the sequence number of the next PDU to be received by the ARQ entity orderly to the sequence number plus the maximum ARQ buffer size.

10. The method according to claim 6, wherein the handling the received new PDU comprises:
if a sequence number of the new PDU is beyond the HARQ buffer range, storing the data in the reordering buffer and updating the state variable of the highest sequence number among the sequence numbers of the PDUs received in the reordering buffer, updating other state variables according to a window mechanism, and performing overflow detection;
if the sequence number of the new PDU is within the HARQ buffer range and no PDU with the same sequence number as the sequence number of the new PDU exists in the HARQ buffer, storing the new PDU into the HARQ buffer;
if the sequence number of the new PDU is within the ARQ buffer range and no PDU with the same sequence number as the sequence number of the new PDU exists in the ARQ buffer, storing the new PDU into the ARQ buffer, and providing a receiving response in accordance a receiving response strategy;
if the sequence number of the new PDU is equal to the sequence number of the next PDU to be received by the ARQ entity orderly, performing detection for SDU reassembly.

11. The method according to claim 6, wherein the detecting the PDUs to be reassembled comprises:
if the predefined reassembly strategy is set to transmit the SDUs orderly, when a PDU with a sequence number equal to the sequence number of the next PDU to be received by the ARQ entity orderly is received, checking consecutive PDUs starting from the PDU with the sequence number equal to the sequence number of the next PDU until an inconsecutive PDU is met; reassembling SDUs from the consecutive PDUs and transmitting the SDUs to the upper layers, and updating corresponding state variables for receiving PDUs orderly;
if the predefined reassembly strategy is set to transmit the SDUs disorderly, transmitting SDUs that are indicated in their entirety among the received PDUs to the upper layers.

12. The method according to claim 6, wherein detecting missing of the PDUs comprises:
if a PDU with a sequence number greater than SN has been received, determining a PDU with a sequence number of SN as a missing data packet.

13. The method according to claim 6, wherein the HARQ buffer range controlled by the predefined moving window is determined according to condition of receiving PDUs, a maximum HARQ buffer size configured by the upper layers and a preset timer; and the HARQ buffer range is from a highest sequence number among the sequence numbers of the PDUs received in the reordering buffer to a sequence number of the next PDU to be received by the HARQ entity orderly, or
wherein the HARQ buffer range controlled by the predefined moving window is determined by condition of receiving PDUs and control of a timer; an upper boundary of the HARQ buffer range is a highest sequence number among the sequence numbers of the received PDUs, and a lower boundary is a highest sequence number among the sequence numbers of the PDUs received when the timer times out.

14. A device for reordering data in a wireless communication system, comprising: a first retransmitting unit (11) and a second retransmitting unit (12), **characterized in that**:
the first retransmitting unit (11) is adapted to transmit received transmission blocks to the second retransmitting unit (12) directly without reordering the transmission blocks that are received by the first retransmitting unit disorderly; and
the second retransmitting unit (12) is adapted to receive the transmission blocks from the first retransmitting unit (11), decapsulate the transmission blocks to obtain upper-layer protocol data units, PDUs, and reorder the PDUs according to the sequence numbers of the upper-layer PDUs, and reassemble the upper-layer PDUs to obtain service data units, SDUs, and then transmit the SDUs to the upper layers.

15. The device according to claim 14, wherein the device further comprises:
a de-multiplexing unit (13) connected to the first retransmitting unit (11) and the second retransmitting unit (12) respectively, which is adapted to de-multiplex the transmission blocks consisting of PDUs from a plurality of link control entity and transmit sub-transmission blocks obtained through the de-multiplexing to the corresponding link control entities.

16. The device according to claim 14 or 15, wherein the first retransmitting unit (11) comprises:
a Hybrid Automatic Repeat Request, HARQ, sub-unit (111), adapted to retransmit the received transmission blocks; and
a determining sub-unit (112), adapted to determine whether the retransmission number of each of the transmission blocks exceeds a pre-configured maximum retransmission number, and, if the retransmission number exceeds the maximum retransmission number, notify the second retransmitting unit (12) that data in the transmission block is missing.

17. The device according to claim 14 or 15, wherein the second retransmitting unit (12) comprises:
at least an Automatic Repeat Request, ARQ, sub-unit (121) connected to the HARQ sub-unit (111) or the de-multiplexing unit (13), which is adapted to decapsulate the received transmission blocks or sub-transmission blocks and transmit the upper-layer PDUs obtained through the decapsulation;
at least a reordering sub-unit (122) connected to the ARQ sub-unit (121), which is adapted to reorder the received upper-layer PDUs according to sequence number or segment sequence number and transmit the reordered upper-layer PDUs; and
at least a reassembling sub-unit (123) connected to the reordering sub-unit (122), which is adapted to remove an information header from each of the received upper-layer PDUs and reassemble the upper-layer PDUs to obtain the SDUs.

## Patentansprüche

1. Verfahren zum Umordnen von Daten in einem drahtlosen Kommunikationssystem, mit den folgenden Schritten:
Empfangen von korrekt decodierten Übertragungsblöcken, und ferner **gekennzeichnet durch** die folgenden Schritte: Senden der Übertragungsblöcke zu einer Streckensteuerentität ohne Umordnen der Übertragungsblöcke, die unordentlich empfangen werden (S11), **durch** eine Medienzugangskontrollentität auf einer Empfangsseite;
Entkapseln der empfangenen Übertragungsblöcke und Umordnen von Protokolldateneinheiten PDU gemäß den Sequenznummern der PDU der oberen Schicht und Neuzusammenstellen (S12) der entkapselten PDU der oberen Schicht, die **durch** das Entkapseln erhalten werden, **durch** die Streckensteuerentität auf der Empfangsseite, um Dienstdateneinheiten SDU zu erhalten.

2. Verfahren nach Anspruch 1, wobei das Verfahren ferner Folgendes umfasst:
wenn irgendeiner der Übertragungsblöcke PDU von mehreren Streckensteuerentitäten enthält, Demultiplexen des Übertragungsblocks und Weiterleiten von durch das Demultiplexen erhaltenen Subübertragungsblöcken zu den entsprechenden Streckensteuerentitäten.

3. Verfahren nach Anspruch 1 oder 2, wobei beim Erhalten der PDU der oberen Schicht die Streckensteuerentität die PDU der oberen Schicht vor dem Umordnen der PDU gemäß den Sequenznummern der PDU der oberen Schicht in einem Umordnungspuffer speichert; und
die Streckensteuerentität die umgeordneten PDU der oberen Schicht mit einer vordefinierten Neuzusammenstellstrategie in den SDU neu zusammenstellt und die neu zusammengestellten SDU zu oberen Schichten sendet.

4. Verfahren nach Anspruch 1 oder 2, wobei das Umordnen und Neuzusammenstellen der entkapselten PDU der oberen Schichten, um die SDU zu erhalten, Folgendes umfasst:
Umordnen der empfangenen PDU der oberen Schichten gemäß Sequenznummer oder Segmentsequenznummer, Entfernen von Informationskopfteilen aus den umgeordneten PDU der oberen Schichten und Neuzusammenstellen der PDU, um die SDU zu erhalten, durch eine Umordnungsentität auf der Empfangsseite.

5. Verfahren nach Anspruch 3, wobei die vordefinierte Neuzusammenstellstrategie Folgendes umfasst: Einstellen, ob die SDU ordentlich oder unordentlich zu senden sind; wenn die vordefinierte Neuzusammenstellstrategie dafür eingestellt ist, die SDU ordentlich zu senden, Wiederherstellen der SDU in einer durch die Sequenznummern der PDU identifizierten Reihenfolge und Senden der SDU zu den oberen Schichten; wenn sie dafür eingestellt ist, die SDU unordentlich zu senden, Senden der SDU in beliebiger Reihenfolge.

6. Verfahren nach Anspruch 3, wobei der vordefinierte Umordnungsmechanismus ein vordefiniertes gleitendes Fenster benutzt, um einen HARQ-Pufferbereich und einen ARQ-Pufferbereich zu steuern, um mit einer empfangenen neuen PDU umzugehen, um die neu zusammenzustellenden PDU und/oder Fehlen der PDU zu detektieren und die PDU neu zusammenzustellen und/oder eine Antwort zu erzeugen.

7. Verfahren nach Anspruch 6, wobei der durch das vordefinierte gleitende Fenster gesteuerte HARQ-Pufferbereich durch einen durch die oberen Schichten konfigurierten festen Fenstergrößenparameter repräsentiert wird und einen anfänglichen Bereich als eine höchste Sequenznummer unter Sequenznummern der in dem Umordnungspuffer empfangenen PDU subtrahiert um den durch die oberen Schichten konfigurierten festen Fenstergrößenparameter und die höchste Sequenznummer unter den Sequenznummern der in dem Umordnungspuffer empfangenen PDU aufweist.

8. Verfahren nach Anspruch 6, wobei der durch das vordefinierte gleitende Fenster gesteuerte ARQ-Pufferbereich zusammen durch eine untere Grenze einer HARQ-Puffergröße, eine Sequenznummer einer durch die ARQ-Entität ordentlich empfangenen PDU und eine maximale ARQ-Puffergröße bestimmt wird.

9. Verfahren nach Anspruch 8, wobei, wenn die Differenz zwischen einer Sequenznummer der nächsten durch die ARQ-Entität ordentlich zu empfangenden PDU und einer zulässigen minimalen HARQ-Puffergröße kleiner oder gleich der maximalen ARQ-Puffergröße ist, der ARQ-Pufferbereich von der Sequenznummer der nächsten durch die ARQ-Entität ordentlich zu empfangenden PDU bis zu der zulässigen minimalen HARQ-Puffergröße reicht;
wenn die Differenz zwischen der Sequenznummer der nächsten durch die ARQ-Entität ordentlich zu empfangenden PDU und der zulässigen minimalen HARQ-Puffergröße größer als die maximale ARQ-Puffergröße ist, der ARQ-Pufferbereich von der Sequenznummer der nächsten durch die ARQ-Entität ordentlich zu empfangenden PDU bis zu der Sequenznummer plus die maximale ARQ-Puffergröße reicht.

10. Verfahren nach Anspruch 6, wobei das Umgehen mit der empfangenen neuen PDU Folgendes umfasst:
wenn eine Sequenznummer der neuen PDU über den HARQ-Pufferbereich hinausgeht, Speichern der Daten in dem Umordnungspuffer und Aktualisieren der Zustandsvariablen der höchsten Sequenznummer unter den Sequenznummern der in dem Umordnungspuffer empfangenen PDU, Aktualisieren anderer Zustandsvariablen gemäß einem Fenstermechanismus und Durchführen von Überlaufdetektion;
wenn die Sequenznummer der neuen PDU in dem HARQ-Pufferbereich liegt und keine PDU mit derselben Sequenznummer wie die Sequenznummer der neuen PDU in dem HARQ-Puffer existiert, Speichern der neuen PDU in dem HARQ-Puffer;
wenn die Sequenznummer der neuen PDU in dem ARQ-Pufferbereich liegt und keine PDU mit derselben Sequenznummer wie die Sequenznummer der neuen PDU in dem ARQ-Puffer existiert, Speichern der neuen PDU in dem ARQ-Puffer und Bereitstellen einer Empfangsantwort gemäß einer Empfangsantwortstrategie;
wenn die Sequenznummer der neuen PDU gleich der Sequenznummer der nächsten durch die ARQ-Entität ordentlich zu empfangenden PDU ist, Durchführen von Detektion auf SDU-Neuzusammenstellung.

11. Verfahren nach Anspruch 6, wobei das Detektieren der neu zusammenzustellenden PDU Folgendes umfasst:
wenn die vordefinierte Neuzusammenstellstrategie dafür eingestellt ist, die SDU ordentlich zu senden und wenn eine PDU mit einer Sequenznummer gleich der Sequenznummer der nächsten durch die ARQ-Entität ordentlich zu empfangenden PDU empfangen wird, Prüfen aufeinanderfolgender PDU beginnend mit der PDU mit der Sequenznummer gleich der Sequenznummer der nächsten PDU, bis eine nichtaufeinanderfolgende PDU angetroffen wird; Neuzusammenstellen von SDU aus den aufeinanderfolgenden PDU und Senden der SDU zu den oberen Schichten und Aktualisieren entsprechender Zustandsvariablen zum ordentlichen Empfangen von PDU;
wenn die vordefinierte Neuzusammenstellstrategie dafür eingestellt ist, die SDU unordentlich zu senden, Senden von SDU, die in ihrer Gesamtheit unter den empfangenen PDU angegeben sind, zu den oberen Schichten.

12. Verfahren nach Anspruch 6, wobei das Detektieren des Fehlens der PDU Folgendes umfasst:
wenn eine PDU mit einer Sequenznummer größer als SN empfangen wurde, Bestimmen einer PDU mit einer Sequenznummer von SN als ein fehlendes Datenpaket.

13. Verfahren nach Anspruch 6, wobei der durch das vordefinierte gleitende Fenster gesteuerte HARQ-Pufferbereich gemäß dem Zustand des Empfangs von PDU, einer durch die oberen Schichten konfigurierten maximalen HARQ-Puffergröße und einem voreingestellten Timer bestimmt wird; und der HARQ-Pufferbereich von einer höchsten Sequenznummer unter den Sequenznummern der in dem Umordnungspuffer empfangenen PDU bis zu einer Sequenznummer der nächsten durch die HARQ-Entität ordentlich zu empfangenden PDU reicht oder
wobei der durch das vordefinierte gleitende Fenster gesteuerte HARQ-Pufferbereich durch den Zustand des Empfangens von PDU und Steuerung eines Timers bestimmt wird; eine obere Grenze des HARQ-Pufferbereichs eine höchste Sequenznummer unter den Sequenznummern der empfangenen PDU ist und eine untere Grenze eine höchste Sequenznummer unter den Sequenznummern der PDU, die empfangen werden, wenn der Timer die Zeitgrenze erreicht, ist.

14. Einrichtung zum Umordnen von Daten in einem drahtlosen Kommunikationssystem, umfassend: eine erste Neusendeeinheit (11) und eine zweite Neusendeeinheit (12), **dadurch gekennzeichnet, dass**
die erste Neusendeeinheit (11) dafür ausgelegt ist, empfangene Übertragungsblöcke direkt ohne Umordnen der Übertragungsblöcke, die unordentlich durch die erste Neusendeeinheit empfangen werden, zu der zweiten Neusendeeinheit (12) zu senden; und
die zweite Neusendeeinheit (12) dafür ausgelegt ist, die Übertragungsblöcke von der ersten Neusendeeinheit (11) zu empfangen, die Übertragungsblöcke zu entkapseln, um Protokolldateneinheiten PDU der oberen Schichten zu erhalten, und die PDU gemäß den Sequenznummern der PDU der oberen Schichten umzuordnen und die PDU der oberen Schichten neu zusammenzustellen, um Dienstdateneinheiten SDU zu erhalten, und dann die SDU zu den oberen Schichten zu senden.

15. Einrichtung nach Anspruch 14, wobei die Einrichtung ferner Folgendes umfasst:
eine mit der ersten Neusendeeinheit (11) bzw. der zweiten Neusendeeinheit (12) verbundene Demultiplexereinheit (13), die dafür ausgelegt ist, die Übertragungsblöcke, die aus PDU von mehreren Streckensteuerentitäten bestehen, zu demultiplexen und durch das Demultiplexen erhaltene Subübertragungsblöcke zu den entsprechenden Streckensteuerentitäten zu senden.

16. Einrichtung nach Anspruch 14 oder 15, wobei die erste Neusendeeinheit (11) Folgendes umfasst:
eine Subeinheit (111) für Hybrid Automatic Repeat Request HARQ, die dafür ausgelegt ist, die empfangenen Übertragungsblöcke neu zu senden; und
eine Bestimmungssubeinheit (112), die dafür ausgelegt ist zu bestimmen, ob die Neuübertragungszahl jedes der Übertragungsblöcke eine vorkonfigurierte maximale Neuübertragungszahl überschreitet, und, wenn die Neuübertragungszahl die maximale Neuübertragungszahl überschreitet, die zweite Neusendeeinheit (12) zu benachrichtigen, dass Daten in dem Übertragungsblock fehlen.

17. Einrichtung nach Anspruch 14 oder 15, wobei die zweite Neusendeeinheit (12) Folgendes umfasst:
mindestens eine mit der HARQ-Subeinheit (111) oder der Demultiplexereinheit (13) verbundene Subeinheit (121) für Automatic Repeat Request ARQ, die dafür ausgelegt ist, die empfangenen Übertragungsblöcke oder Subübertragungsblöcke zu entkapseln und die durch die Entkapselung erhaltenen PDU der oberen Schichten zu senden;
mindestens eine mit der ARQ-Subeinheit (121) verbundene Umordnungssubeinheit (122), die dafür ausgelegt ist, die empfangenen PDU der oberen Schichten gemäß Sequenznummer oder Segmentsequenznummer umzuordnen und die umgeordneten PDU der oberen Schichten zu senden; und
mindestens eine mit der Umordnungssubeinheit (122) verbundene Neuzusammenstellsubeinheit (123), die dafür ausgelegt ist, von jeder der empfangenen PDU der oberen Schichten einen Informationskopfteil zu entfernen und die PDU der oberen Schichten neu zusammenzustellen, um die SDU zu erhalten.

## Revendications

1. Procédé de remise en ordre de données dans un système de communication sans fil, comprenant les étapes suivantes :
réception de blocs de transmission correctement décodés et **caractérisé en outre par** les étapes suivantes :
transmission des blocs de transmission à une entité de commande de liaison sans remise en ordre des blocs de transmission qui sont reçus dans le désordre (S11), par une entité de commande d'accès au support située côté réception ;
désencapsulage des blocs de transmission reçus et remise en ordre des unités de données de protocole, PDU, en fonction des numéros de séquence des PDU de couches supérieures, et réassemblage (S12) des PDU de couches supérieures désencapsulées, obtenues par le biais du désencapsulage, par l'entité de commande de liaison située côté réception, afin d'obtenir des unités de données de service, SDU.

2. Procédé selon la revendication 1, comprenant en outre :
si l'un quelconque des blocs de transmission contient des PDU provenant d'une pluralité d'entités de commande de liaison, le démultiplexage du bloc de transmission et l'acheminement de sous-blocs de transmission obtenus par le biais du démultiplexage aux entités de commande de liaison correspondantes.

3. Procédé selon la revendication 1 ou 2, dans lequel à l'obtention des PDU de couches supérieures, l'entité de commande de liaison mémorise les PDU de couches supérieures dans un tampon de remise en ordre avant de remettre en ordre les PDU en fonction des numéros de séquence des PDU de couches supérieures ; et
l'entité de commande de liaison réassemble les PDU de couches supérieures remises en ordre en les SDU avec une stratégie de réassemblage prédéfinie, et transmet les SDU réassemblées aux couches supérieures.

4. Procédé selon la revendication 1 ou 2, dans lequel la remise en ordre et le réassemblage des PDU de couches supérieures désencapsulées pour obtenir les SDU comprend :
la remise en ordre des PDU de couches supérieures reçues en fonction du numéro de séquence ou du numéro de séquence de segment, l'extraction des en-têtes d'information des PDU de couches supérieures remises en ordre, et le réassemblage des PDU afin d'obtenir les SDU, par une entité de remise en ordre située côté réception.

5. Procédé selon la revendication 3, dans lequel la stratégie de réassemblage prédéfinie comprend : la décision de transmettre les SDU dans l'ordre ou dans le désordre ; si la stratégie de réassemblage prédéfinie est de transmettre les SDU dans l'ordre, la récupération des SDU dans un ordre identifié par les numéros de séquence des PDU et la transmission des SDU aux couches supérieures ; si elle est de transmettre les SDU dans le désordre, la transmission des SDU dans n'importe quel ordre.

6. Procédé selon la revendication 3, dans lequel le mécanisme de remise en ordre prédéfini utilise une fenêtre mobile prédéfinie pour commander une plage de tampon HARQ et une plage de tampon ARQ, prendre en charge une nouvelle PDU reçue, détecter les PDU à réassembler et/ou l'absence de PDU, et réassembler les PDU et/ou créer une réponse.

7. Procédé selon la revendication 6, dans lequel la plage de tampon HARQ commandée par la fenêtre mobile prédéfinie est représentée par un paramètre de taille de fenêtre fixe configuré par les couches supérieures, et a une plage initiale comme numéro de séquence le plus élevé parmi les numéros de séquence des PDU reçues dans le tampon de remise en ordre duquel est soustrait le paramètre de taille de fenêtre fixe configuré par les couches supérieures et le numéro de séquence le plus élevé parmi les numéros de séquence des PDU reçues dans le tampon de remise en ordre.

8. Procédé selon la revendication 6, dans lequel la plage de tampon ARQ commandée par la fenêtre mobile prédéfinie est déterminée conjointement par une limite inférieure d'une taille de tampon HARQ, un numéro de séquence d'une PDU reçue par l'entité ARQ de façon ordonnée et une taille de tampon ARQ maximum.

9. Procédé selon la revendication 8, dans lequel si la différence entre un numéro de séquence de la PDU suivante devant être reçue par l'entité ARQ dans l'ordre et une taille de tampon HARQ minimum admissible est inférieure ou égale à la taille de tampon ARQ maximum, la plage de tampon ARQ s'étend du numéro de séquence de la PDU suivante que doit recevoir l'entité ARQ dans l'ordre jusqu'à la taille de tampon HARQ minimum admissible ;
si la différence entre le numéro de séquence de la PDU suivante que doit recevoir l'entité ARQ dans l'ordre et la taille de tampon HARQ minimum admissible est supérieure à la taille de tampon ARQ maximum, la plage de tampon ARQ s'étend du numéro de séquence de la PDU suivante que doit recevoir l'entité ARQ dans l'ordre au numéro de séquence plus la taille de tampon ARQ maximum.

10. Procédé selon la revendication 6, dans lequel la prise en charge de la nouvelle PDU reçue comprend :
si un numéro de séquence de la nouvelle PDU dépasse la plage de tampon HARQ, la mémorisation des données dans le tampon de remise en ordre et l'actualisation de la variable d'état du numéro de séquence le plus élevé parmi les numéros de séquence des PDU reçues dans le tampon de remise en ordre, l'actualisation d'autres variables d'état en fonction d'un mécanisme de fenêtre, et l'exécution d'une détection de débordement ;
si le numéro de séquence de la nouvelle PDU est compris dans la plage de tampon HARQ et si aucune PDU ayant le même numéro de séquence que le numéro de séquence de la nouvelle PDU existe dans le tampon HARQ, la mémorisation de la nouvelle PDU dans le tampon HARQ ;
si le numéro de séquence de la nouvelle PDU est compris dans la plage de tampon ARQ et si aucune PDU ayant le même numéro de séquence que le numéro de séquence de la nouvelle PDU existe dans le tampon ARQ, la mémorisation de la nouvelle PDU dans le tampon ARQ, et la production d'une réponse de réception conformément à une stratégie de réponse de réception ;
si le numéro de séquence de la nouvelle PDU est égal au numéro de séquence de la PDU suivante devant être reçue par l'entité ARQ dans l'ordre, l'exécution d'une détection pour le réassemblage en SDU.

11. Procédé selon la revendication 6, dans lequel la détection des PDU à réassembler comprend :
si la stratégie de réassemblage prédéfinie est de transmettre les SDU dans l'ordre, quand une PDU ayant un numéro de séquence égal au numéro de séquence de la PDU suivante devant être reçue par l'entité ARQ dans l'ordre est reçue, la vérification des PDU consécutives depuis la PDU ayant le même numéro de séquence que le numéro de séquence de la PDU suivante jusqu'à ce qu'une PDU non consécutive soit rencontrée ; le réassemblage en SDU à partir des PDU consécutives et la transmission des SDU aux couches supérieures, et l'actualisation des variables d'état correspondantes pour recevoir les PDU dans l'ordre ;
si la stratégie de réassemblage prédéfinie est de transmettre les SDU dans le désordre, la transmission des SDU qui sont indiquées dans leur totalité parmi les PDU reçues aux couches supérieures.

12. Procédé selon la revendication 6, dans lequel la détection de l'absence de PDU comprend :
si une PDU ayant un numéro de séquence supérieur à SN a été reçue, la détermination d'une PDU ayant un numéro de séquence de SN comme paquet de données manquant.

13. Procédé selon la revendication 6, dans lequel la plage de tampon HARQ commandée par la fenêtre mobile prédéfinie est déterminée en fonction d'une condition de réception de PDU, d'une taille de tampon HARQ maximum configurée par les couches supérieures et d'une temporisation préréglée ; et la plage de tampon HARQ s'étend d'un numéro de séquence le plus élevé parmi les numéros de séquence des PDU reçues dans le tampon de remise en ordre jusqu'à un numéro de séquence de la PDU suivante devant être reçue par l'entité HARQ dans l'ordre, ou
dans lequel la plage de tampon HARQ commandée par la fenêtre mobile prédéfinie est déterminée en fonction d'une condition de réception de PDU et de commande d'une temporisation ; une limite supérieure de la plage de tampon HARQ étant un numéro de séquence le plus élevé parmi les numéros de séquence des PDU reçues, et une limite inférieure étant un numéro de séquence le plus élevé parmi les numéros de séquence des PDU reçues à l'expiration de la temporisation.

14. Dispositif de remise en ordre de données dans un système de communication sans fil, comprenant : une première unité de retransmission (11) et une seconde unité de retransmission (12), **caractérisé en ce que** :
la première unité de retransmission (11) est adaptée pour transmettre directement des blocs de transmission reçus à la seconde unité de retransmission (12) sans remise en ordre des blocs de transmission qui sont reçus par la première unité de retransmission dans le désordre ; et
la seconde unité de retransmission (12) est adaptée pour recevoir les blocs de transmission depuis la première unité de retransmission (11), désencapsuler les blocs de transmission afin d'obtenir des unités de données de protocole, PDU, de couches supérieures, et remettre en ordre les PDU en fonction des numéros de séquence des PDU de couches supérieures, et réassembler les PDU de couches supérieures afin d'obtenir des unités des données de service, SDU, puis transmettre les SDU aux couches supérieures.

15. Dispositif selon la revendication 14, comprenant en outre :
une unité de démultiplexage (13) connectée à la première unité de retransmission (11) et à la seconde unité de retransmission (12) respectivement, adaptée pour démultiplexer les blocs de transmission consistant en PDU provenant d'une pluralité d'entités de commande de liaison et transmettre des sous-blocs de transmission obtenus par le biais du démultiplexage aux entités de commande de liaison correspondantes.

16. Dispositif selon la revendication 14 ou 15, dans lequel la première unité de retransmission (11) comprend :
une sous-unité de Requête de Répétition Automatique Hybride, HARQ, (111), adaptée pour retransmettre les blocs de transmission reçus ; et
une sous-unité de détermination (112), adaptée pour déterminer si le nombre de retransmissions de chacun des blocs de transmission dépasse ou non un nombre de retransmissions maximum préconfiguré, et, si le nombre de retransmissions dépasse le nombre de retransmissions maximum, notifier la seconde unité de retransmission (12) que des données manquent dans le bloc de transmission.

17. Dispositif selon la revendication 14 ou 15, dans lequel la seconde unité de retransmission (12) comprend :
au moins une sous-unité de Requête de Répétition Automatique, ARQ, (121) connectée à la sous-unité HARQ (111) ou à l'unité de démultiplexage (13), adaptée pour désencapsuler les blocs de transmission ou les sous-blocs de transmission reçus et transmettre les PDU de couches supérieures obtenues par le biais du désencapsulage;
au moins une sous-unité de remise en ordre (122) connectée à la sous-unité ARQ (121), adaptée pour remettre en ordre les PDU de couches supérieures reçues en fonction du numéro de séquence ou numéro de séquence de segment et transmettre les PDU de couches supérieures remises en ordre : et
au moins une sous-unité de réassemblage (123) connectée à la sous-unité de remise en ordre (122), adaptée pour extraire un en-tête d'information de chacune des PDU de couches supérieures reçues et réassembler les PDU de couches supérieures afin d'obtenir les SDU.
